# EUROPEAN PATENT SPECIFICATION

(11) **EP 2 983 463 B1**
(45) Date of publication and mention of the grant of the patent: **10.05.2017**
(21) Application number: 14734237.2
(22) Date of filing: 25.03.2014
(51) Int. Cl.: A01G 9/02

(54) **VERTICAL GARDEN SYSTEM**
VERTIKALGARTENSYSTEM
SYSTÈME DE JARDIN VERTICAL

(30) Priority: 11.04.2013 IN 1357MU2013
(43) Date of publication of application: 17.02.2016
(73) Proprietor: Shah, Kumarpal, Mumbai 400027 (IN)
(72) Inventor: Shah, Kumarpal, Mumbai 400027 (IN)
(74) Representative: Global IP Europe Patentanwaltskanzlei
(86) International application number: PCT/IN2014/000187
(87) International publication number: WO 2014/167576

(56) References cited:
- EP-A2- 2 322 031
- WO-A1-2010/082717
- WO-A2-2012/129522
- TW-A- 201 233 322

## Description

### FIELD OF THE INVENTION

The present invention relates to a vertical gardening system in modular form. The vertical garden system is expandable horizontally as well as vertically. The vertical garden system of the present invention provides a drainage system wherein water is drained out at specific or regular distance intervals. The present invention further provides a vertical garden system wherein the water supply per pot can be regulated as per plant requirement. The vertical garden system of the present invention comprises a frame; drip irrigation pipe(s); drainage pipe(s); drain tray; and optionally pots or plant containers.

### BACKGROUND OF THE INVENTION

Nowadays, horizontal open spaces in urban cities are shrinking due to pressure on the land which leaves hardly any scope of greenery. Moreover, with increasing levels of pollution, there is a pressing need for greenery and plants which act as natural air purifiers. Thus, the only solution is Vertical Gardening. There are various ways of installing a Vertical Garden on a given vertical surface. The most common being modules with 16 or 12 cavities and the Geotextile / Polyamide Felt anchorage system. In TW 201 233 322, a vertical garden system is disclosed with a special design where water excess is dripped from the top layers of the rack to the bottom layers of the rack without a drainage system. Various planter systems and vertical garden systems are known on the art for instance US 8,141,294 B2 provides planter system and methods for supporting living plants on a vertical surface.

US 7,516,574 B2 discloses a vertical garden planter with marginal planter port cartridge units stacked on top of each other. The planter port units include a central cylinder having an array of obliquely placed truncated cylinders, which are truncated at the top to provide a horizontal top edge allowing for maximum water flow to the edge of each planter port. Besides this some vertical garden planters require extra sprinkler feeds at the top of the vertical garden, which adds unnecessary moving parts, as provided in US 4,419,843.

EP 2 335 473 A1 is directed to a system for creating a vertical garden on a wall comprising a plurality of struts, destined to be spaced out on the wall and a vase unit hanging between two struts.

In most vertical garden systems, the water from one module drains into the lower modules and so on so forth. Thus the lowest module gets the water from all the above modules and thus there is high probability of plants getting damaged and rotting due to high water saturation.

In the vertical garden systems of the prior art, the water supply is for a zone of plants & not an individual plant. Every plant has different requirements of water for healthy growth. In most vertical garden systems, there are drippers on the irrigation lines which feed more than one plant in a module or given zone. Thus one cannot regulate the water supply to each and every plant individually. Hence there is a need in the art for a vertical garden system wherein each individual plant is watered independently thereby a combination of plants (of different water requirements) can be grown giving the user the freedom to create planting designs as per their imagination. Accordingly there is a need to provide a vertical garden system which addresses the issue of water saturation and which provides desired and regulated water supply to each and every plant.

In the vertical garden systems available, there is no integrated drainage system where the water can be arrested at regular intervals and drained out independently. Thus the water flowing from top to down due to gravity, causes a saturation in the lower zones and the plants tend to die due to overwatering in those areas; their roots decay and the infection can spread to the entire living wall making all the plants unhealthy. The present invention provides a vertical garden system wherein drain water can be collected at various intervals and thereby the saturation factor due to excess water collection can be eliminated.

In the vertical garden systems available, it is not possible to individually remove a plant from the zone to replace it. The replacement may be for mortality change or just design change. In the vertical garden system of the present invention the replacement/removal of plants is made very easy as any individual plant can be removed and replaced with the new desired one.

The vertical garden system of the present invention addresses these issues. The present invention provides a modular vertical garden system which can expand horizontally as well as vertically. By employing the vertical garden system of the present invention it is possible to create enchanting patterns, using wide range of choice plants, herbs, medicinal plants, vegetables, fruits, flowers etc. depending on the light conditions available at the site. The vertical garden system of the present invention avoids water saturation and provides regulated water supply to each and every plant.

### OBJECTS OF THE INVENTION

The primary object of the invention is to provide a vertical garden system in a modular form which can be expanded horizontally as well as vertically without being restricted for want of horizontal open spaces.

It is another object of the invention to provide a vertical garden system which provides a regulated water supply to each plant as per the requirements of each plant.

It is another object of the invention to provide a vertical garden system which provides a drainage system wherein water is drained out at
specific/regular distance intervals thereby avoiding water saturation and plant rotting.

It is still another object of the present invention to provide a vertical garden system wherein the replacement/removal of plants is made very easy and any individual plant can be removed and replaced with the new desired plant.

### SUMMARY OF THE INVENTION

The invention relates to an expandable vertical garden system according to claim 1. Further preferred embodiments are described in the dependent claims.

In an embodiment the present invention provides an expandable vertical garden system comprising: [a] frame; [b] drip irrigation pipe(s); [c] drainage pipe(s); [d] drain tray; and optionally [e] pots or plant containers.

In another embodiment the present invention provides an expandable vertical garden system wherein the frame comprises: [a] holes (1) for inserting screws which get drilled into the support wall/framework; [b] cavity (2) wherein pots can be snapped in and snapped out; [c] support snubs (3) in each cavity for the pots to get good anchorage; [d] small holes (4) above each cavity, wherein the clip to hold horizontal irrigation pipe can be fixed in; [e] a large hole (5) at the bottom of the frame for inserting the drain tray (7); [f] a cavity on rear side of each frame wherein the drainage pipe (6) can be fixed.

In yet another embodiment the present invention provides an expandable vertical garden system wherein the drainage pipe (6) is connected to the drain tray (7) using a joint connector (8).

In still another embodiment the present invention provides an expandable vertical garden system wherein the joint connector is a "T" or "L" shaped joint connector.

In another embodiment the present invention provides an expandable vertical garden system wherein the drain tray (7) is fixed after every third pot.

In still another embodiment the present invention provides an expandable vertical garden system wherein the frame contains side vertical supports wherein clips can be fixed to support the vertical irrigation pipe.

In yet another embodiment the present invention provides an expandable vertical garden system wherein the frame can be fixed side by side and/ or one on top of the other.

In yet another embodiment the present invention provides an expandable vertical garden system wherein the system further contains drip irrigation line(s) (9).

In another embodiment the present invention provides an expandable vertical garden system wherein each pot or plant container contains drip irrigation line (9) for regulating supply of water per pot.

In still another embodiment the present invention provides an expandable vertical garden system wherein the irrigation line can be regulated by an Automated and/or Manual system.

In yet another embodiment the present invention provides an expandable vertical garden system wherein the frame contains: [a] four holes (1) for inserting screws which get drilled into the support wall / framework; [b] three large cavities (2) wherein the pots or plant containers can be snapped in and snapped out; [c] four support snubs (3) in each cavity for the pots to get anchorage; [d] two small holes (4) wherein the clip to hold the horizontal irrigation pipe can be fixed in; [e] a large hole (5) for inserting the drain tray (7).

In another embodiment the present invention the expandable vertical garden system is expandable vertically and/or horizontally.

In still another embodiment the present invention provides a method of plantation comprising the vertical garden system disclosed herein.

### BRIEF DESCRIPTION OF THE FIGURES

The vertical garden system of the invention is described hereinafter, and with reference to the accompanying illustrative figures. It must however, be appreciated that the same constructional features described herein can be replicated with minor modification in other garden systems.
**FIGURE 1****:** Frame of the vertical garden system showing: [a] holes (1) for inserting screws; [b] cavity (2) for fitting pots; [c] support snubs (3); [d] holes (4) above each cavity, for holding and fixing horizontal irrigation pipe; [e] large hole (5).
**FIGURE 2****:** Vertical garden system with drainage (front view): Frame of the vertical garden system described in Figure 1 showing drainage pipe (6) connected to the front drain tray (7) using a joint connector (8). The figure also shows horizontal drip irrigation pipes(s)/line(s) (9).
**FIGURE 3****:** Vertical garden system with drainage (side view).
**FIGURE 4: (A)** Magnified view of vertical garden system with drainage (side view) and **(B)** Magnified view of drain tray (7) connected to the frame.
**FIGURE 5: (A)** This figure shows irrigation lines along with clips; drainage pipe; and pot or plant container (aerial view); and **(B)** Views of drain tray; drain pipe and joint connector.
**FIGURE 6: (A)** View of pot/plant containers; **(B)** view of drain tray; and **(C)** clips for attaching and holding drip irrigation pipe.
**FIGURE 7****:** The figure shows frames of vertical garden system fixed to the wall to create a green living wall.
**FIGURE 8****:** The figure shows **(A)** fixing of bituminous sheet on wall; and **(B)** fixing drainage pipe on water proofed surface.
**FIGURE 9****:** This figure shows **(A)** fixing of frames followed by fixing clips with irrigation pipe(s); and **(B)** fixing of drain tray to the frame of vertical garden system.
**FIGURE 10****:** This figure shows **(A)** fixing of pots onto the frame of vertical garden system; and **(B)** complete vertical garden system with drip irrigation pipes, pots/plant containers, drain tray and drain pipes.

### DETAILED DESCRIPTION OF THE INVENTION

The invention is described hereinafter however; variations and modifications are possible without departing from the essential inventive concept embodied herein. The specific constructional detail described herein is not limiting and is intended to provide teaching to one skilled in the art to employ the present invention in any other vertical garden system which is used for a similar function.

The modular vertical garden system of the present invention needs about 4 to 8 inches wide strip of open space where the system can be fixed and installed. The frame of the vertical garden system can be prepared using environmentally friendly material like polyolefin, poly propylene, poly propylene co-polymer, poly vinyl chloride, high density poly ethylene, re-cycled poly propylene or any other equivalent thereof preferably re-cycled poly propylene.

The vertical garden system of the present invention has been designed to facilitate easy wall fixing. The vertical garden system of the present invention comprises: (a) frame; (b) drip irrigation pipe(s); (c) drain pipe(s); (d) drain tray; and optionally (e) pots or plant containers.

The frame comprises: [a] holes (1) for inserting screws which get drilled into the support wall/framework; [b] cavity (2) wherein pots can be snapped in and snapped out; [c] support snubs (3) in each cavity for the pots to get good anchorage; [d] small holes (4) above each cavity, wherein the clip to hold horizontal irrigation pipe can be fixed in; [e] a large hole (5) at the bottom of the frame for inserting the drain tray (7); [f] a cavity on rear side of each frame wherein the drainage pipe (6) can be fixed.

The frame of the vertical garden system may optionally contain side vertical supports of the frame where clips can be fixed to support the vertical irrigation pipe wherever needed.

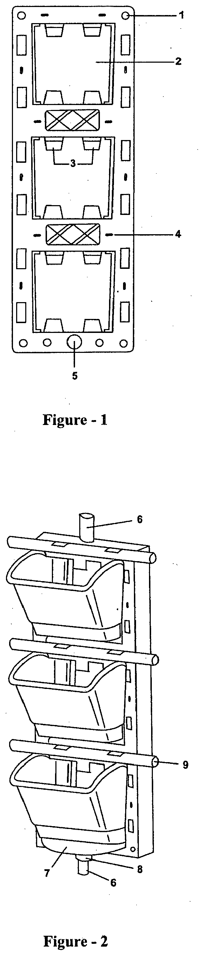

In a preferable embodiment (Figure 1) the frame may contain: (a) four holes (1) to insert screws which then get drilled into the support wall / framework; (b) three large cavities where the pots or plant containers can be snapped in & snapped out smoothly; (c) four support snubs (3) in each cavity for the pots to get good anchorage; (d) two small holes (4) where the clip to hold the horizontal irrigation pipe can be fixed in; (e) a large hole (5) from where the drain tray (7) can be inserted. Thus for every three pots or plant containers there is one drain tray.

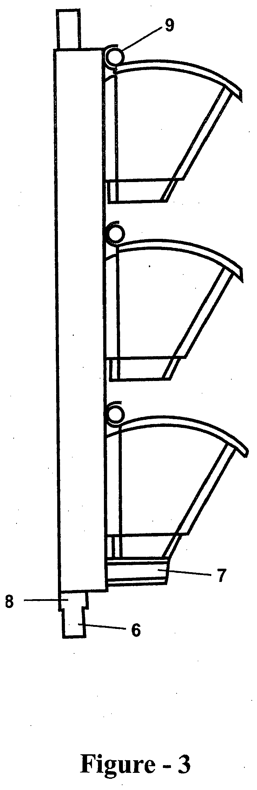

The frame of the present invention can support a pot or plant container with growing media and plants weighing upto 1000 gms each gets good support and anchorage so that it does not eject out easily. On the rear side of each frame there is a cavity where the drainpipe can be fixed and thus the drain pipe is not visible. The drainage pipe (6) is connected to the front drain tray (7) using a joint connector (8) preferably a "T" or "L" shaped joint connector (Figures 2 and 3).

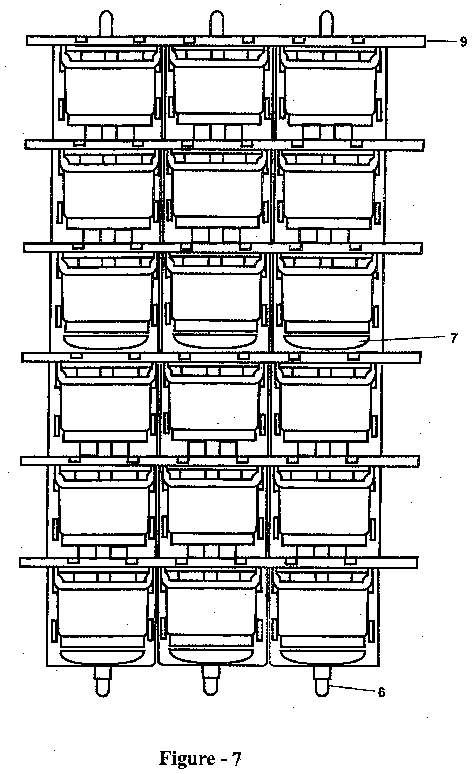

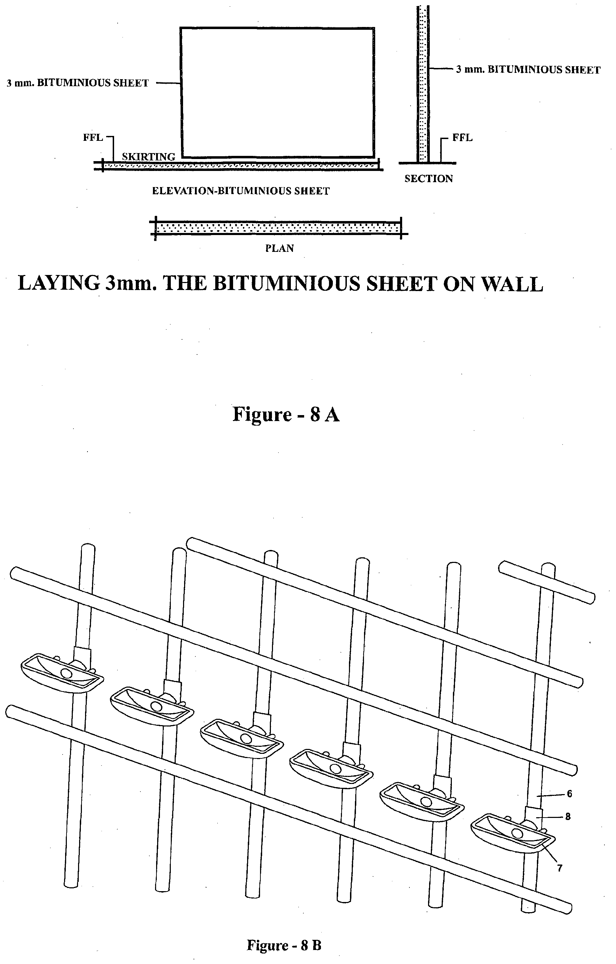

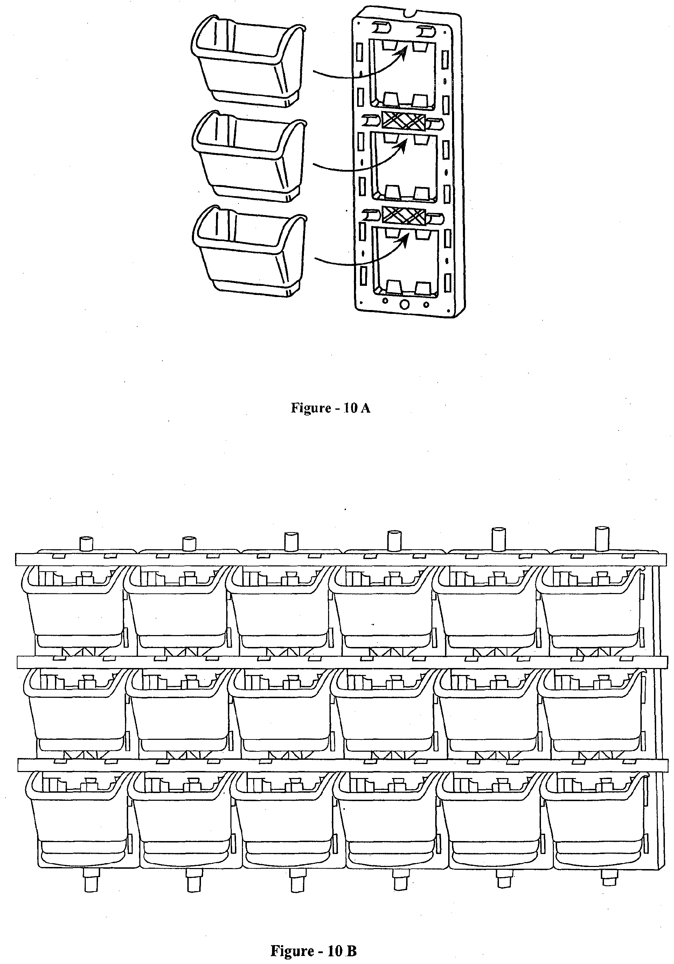

The frames can be fixed side by side and one on top of another so as to cover the entire wall which requires to be made into a vertical garden [Figures 7 and 10(B)].

The vertical garden system disclosed herein can be employed for method of plantation.

### Drainage system:

One of the special features of the vertical garden system of the present invention is its drainage system. The vertical garden system of the present invention has a drain tray (7) fixed after every third pot. Thus the water is arrested and drained out at every specific interval and thus there is no plant mortality due to water saturation.

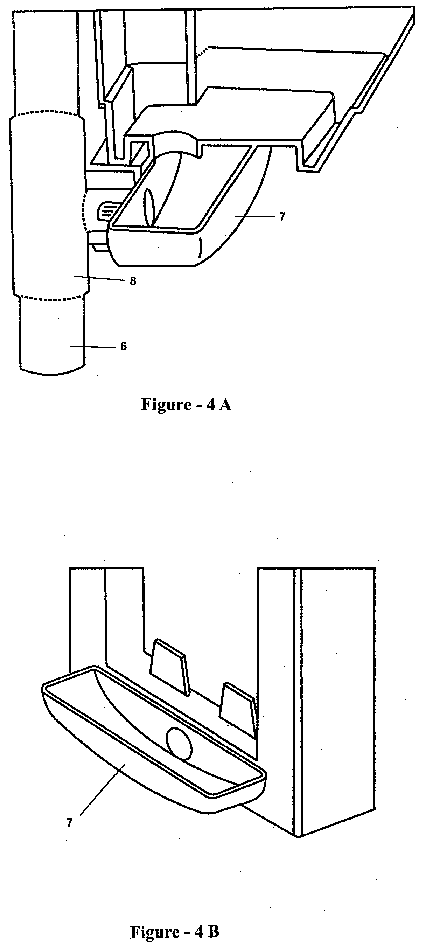

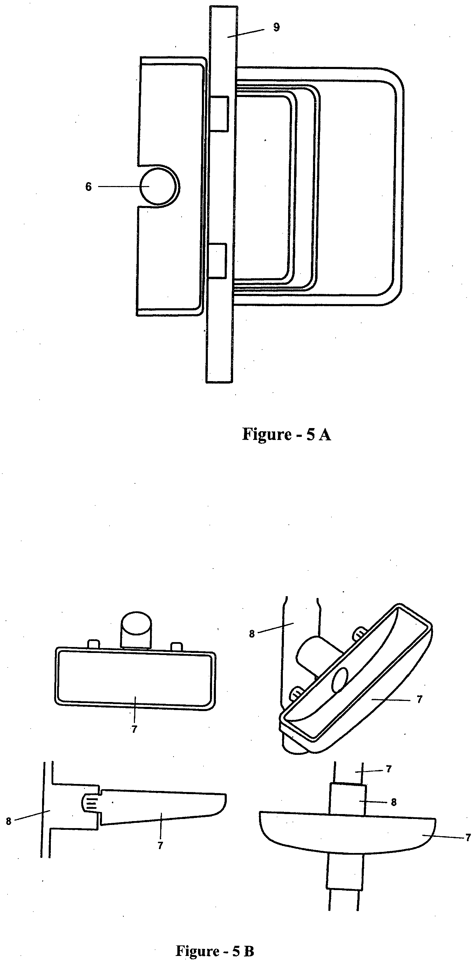

The working of the drainage (Figures 4 and 5) involves: (A) at the bottom of each frame, there is a large hole from where the drain tray can be inserted. Thus for example after every specific interval pots, there is one drain tray. (B) On the rear side, each frame has a cavity where the drainpipe (6) can be fixed and thus the drain pipe is not visible. The drainpipe (6) is then connected to the front drain tray (7) using joint connector (8) preferably a "T" joiner. (C) One end of the joiner connects the corresponding frames drain tray (7), the other end to its rear drain pipe and the last end connects to the drain pipe of the next

### Irrigation system:

Another special feature of the vertical garden system of the present invention is its irrigation system. In the present invention each and every pot or plant container has a corresponding dripper and thus the water supply per pot can be regulated as per the plant requirement. One can fix a 1LPH / 2LPH / 3LPF / 4LPH or more capacity dripper on the horizontal irrigation line.

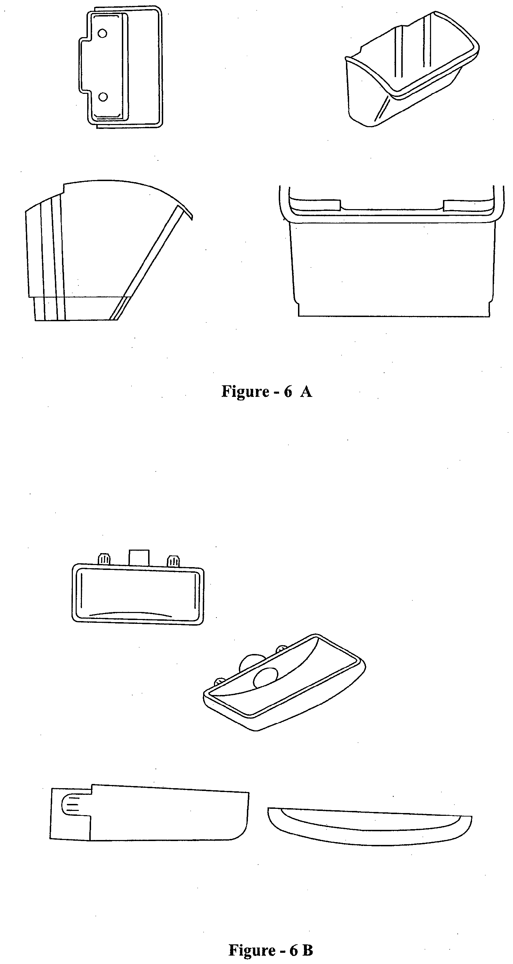

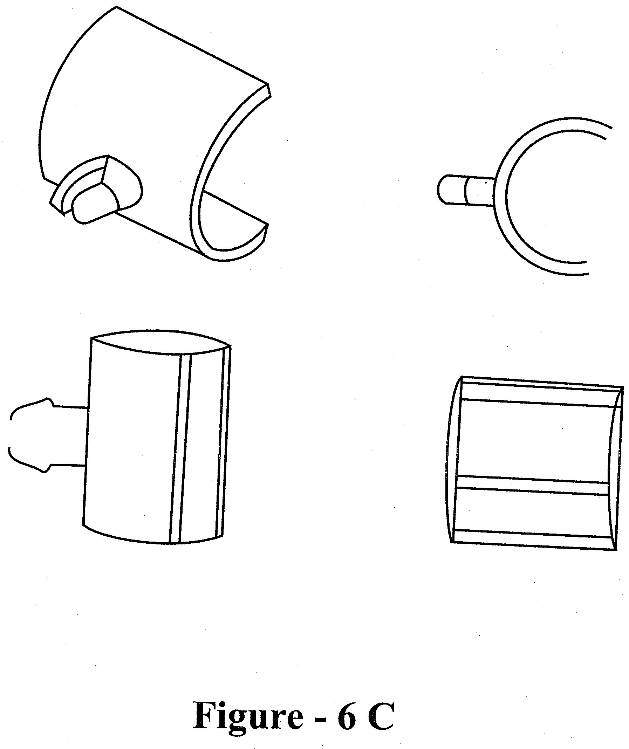

Above each cavity, there are small holes preferably two where the clip to hold the horizontal irrigation pipe can be fixed in. There are additional small side vertical supports preferably six of the frame where clips can be fixed to support the vertical irrigation pipe wherever needed (Figure 6).

The irrigation system can then be connected to the main water supply line. The working of the irrigation system can be regulated using an Automated or Manual system depending upon the client's requirement / site conditions.

A fertilizer tank / ventury can also be fixed to the irrigation system for automated fertilizer dispensing.

### Installation of the vertical garden system:

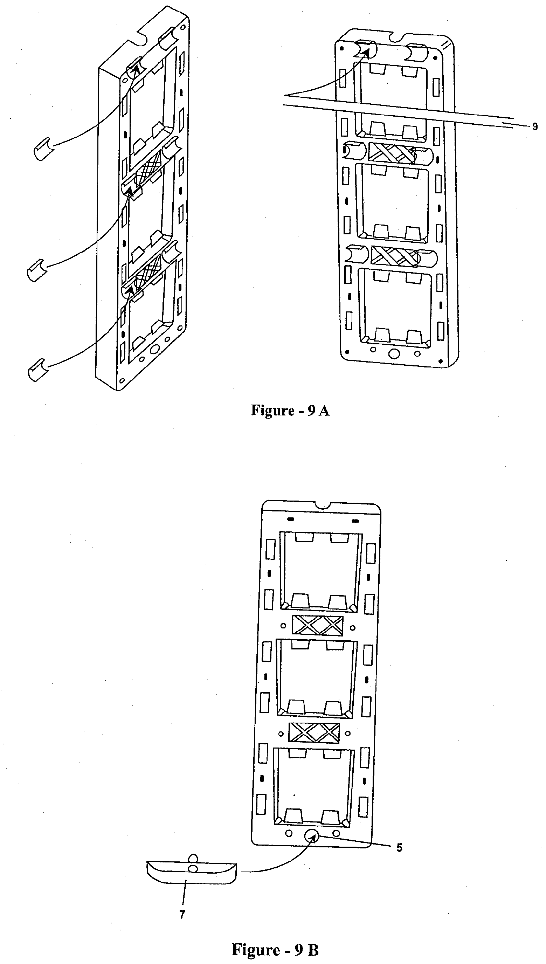

The vertical garden system can be installed on any smooth wall (Figures 8 and 9). If there is a free standing framework for example a metal framework, a MR grade plywood or any other equivalent material can be fixed to have the smooth surface. On the smooth surface of the wall, plywood, or any other material any bituminous sheet such as industrial bitumen, paving bitumen, crumb rubber modified bitumen (CRMB), polymer modified bitumen (PMB), bitumen emulsion or materials like Hessian felt, joint piller board, primer etc. shall be fixed for waterproofing the same. Drainage Pipes shall be fixed with glue tapes. Vertical garden system frames shall be fixed above these.

### Example:

On the smooth surface of the wall / plywood, Bituminous sheet is fixed for waterproofing the same. Drainage pipes are fixed with glue tapes. Vertical garden system frames are fixed above these. A 16 mm drip lateral followed by drippers (Each dripper is dedicated for per pot) is fixed on these frames. These drip lines and drain lines are connected to the main lines. After this, the planted pots are installed on the frames.

### Advantages of the present invention:

1. It is possible to create most enchanting patterns with the vertical gardening system of the present invention using wide range of your choice plants, herbs, flowers, fruits, medicinal plants and vegetables depending on the light conditions available at your site.
2. Due to its modular design it is possible to make any design by extending the vertical garden system frame both vertically & horizontally. it is possible to create circular tower, stand-alone square column or rectangular shapes, as far as your space and imagination can facilitate.
3. The pots can be easily snapped-in or snapped-out onto the vertical garden system frame, thus providing convenience of installation and change whenever needed.
4. Drain pipes are not seen once the system is fully installed thuis the system is aesthetically advantageous.
5. Stop Contamination: The water borne contaminations usually spread from one pot to the other due to the water flowing from one pot to the other. In the vertical garden system of the present invention, drain trays are placed at regular intervals and thus reduce the chances of plant contamination of this sort.
6. Irrigation: the vertical garden system of the present invention has provision to easily fix drip lines to irrigate the every individual plant pot.
7. Drain trays are placed at specific intervals: These trays are uniquely shaped and sloped at the base to drain out all the dripped water from the pots above. Thus, plant mortality due to over watering and saturation is minimized.
8. Pots: Different sizes for different plant types. Independent planter makes diverse plant varieties to grow unlike other green wall modular systems where you cannot monitor the water requirement. The present invention provides easy to replace individual pots/plant containers. Change in planting pattern is made easy. The plant pots can be readied at the nursery and installed at the site.

## Claims

1. An expandable vertical garden system comprising:
[a] frame;
[b] drip irrigation pipe(s);
[c] drainage pipe(s);
[d] drain tray; and optionally
[e] pots or plant containers; wherein said frame comprises:
[i] holes (1) for inserting screws which get drilled into the support wall/ framework;
[ii] cavity (2) wherein pots can be snapped in and snapped out;
[iii] support elements (3) in each cavity for the pots to get good anchorage; [iv] small holes (4) above each cavity, wherein the clip to hold horizontal irrigation pipe can be fixed in;
[v] a large hole (5) at the bottom of the frame for inserting the drain tray (7);
[vi] a cavity on rear side of each frame wherein the drainage pipe (6) can be fixed.

2. An expandable vertical garden system as claimed in claim 1 wherein said drainage pipe (6) is connected to the drain tray (7) using a joint connector (8).

3. An expandable vertical garden system as claimed in claim 2 wherein said joint connector is a "T" or "L" shaped joint connector.

4. An expandable vertical garden system as claimed in any of the preceding claims wherein said drain tray (7) is fixed after every third cavity.

5. An expandable vertical garden system as claimed in any of the preceding claims wherein said frame optionally contains side vertical supports wherein clips can be fixed to support the vertical irrigation pipe.

6. An expandable vertical garden system as claimed in any of the preceding claims wherein said frame can be fixed side by side and/or one on top of the other.

7. An expandable vertical garden system as claimed in any of the preceding claims wherein each pot or plant container is drip irrigated by drippers fixed on the drip irrigation line (9) thereby -regulating supply of water per pot.

8. An expandable vertical garden system as claimed in any of the preceding claims wherein the irrigation line can be regulated by an Automated and/or Manual system.

9. An expandable vertical garden system as claimed in any of the preceding claims wherein the frame contains:
[i] four holes (1) for inserting screws which get drilled into the support wall / framework;
[ii] three large cavities (2) wherein the pots or plant containers can be snapped in and snapped out;
[iii] four support elements (3) in each cavity for the pots to get anchorage; [iv] two small holes (4) wherein the clip to hold the horizontal irrigation pipe can be fixed in;
[v] a large hole (5) for inserting the drain tray (7);
[vi] a cavity on rear side of each frame wherein the drainage pipe (6) can be fixed.

10. The expandable vertical garden system as claimed in claim 1 wherein the system is expandable vertically and/or horizontally.

11. A method of plantation comprising the vertical garden system as claimed in any preceding claim.

## Patentansprüche

1. Erweiterbares vertikales Gartensystem, das aufweist:
[a] einen Rahmen;
[b] ein Tropfenbewässerungsrohr(e);
[c] ein Entwässerungsrohr(e);
[d] eine Auffangwanne; und optional
[e] Töpfe oder Pflanzenbehälter; wobei der Rahmen aufweist:
[i] Löcher (1) zum Einsetzen von Schrauben, die in die Haltewand / das Rahmentragwerk gebohrt werden;
[ii] einen Hohlraum (2), in den Töpfe eingerastet und ausgerastet werden können;
[iii] Halteelemente (3) in jedem Hohlraum, damit die Töpfe eine gute Verankerung erhalten;
[iv] kleine Löcher (4) über jedem Hohlraum, in die die Klemme zum Halten eines horizontalen Bewässerungsrohrs befestigt werden kann;
[v] ein großes Loch (5) am Boden des Rahmens zum Einsetzen der Auffangwanne (7);
[vi] einen Hohlraum auf der Rückseite jedes Rahmens, in dem das Entwässerungsrohr (6) befestigt werden kann.

2. Erweiterbares vertikales Gartensystem nach Anspruch 1, wobei das Entwässerungsrohr (6) mittels eines Gelenkverbindungsstücks (8) mit der Auffangwanne (7) verbunden ist.

3. Erweiterbares vertikales Gartensystem nach Anspruch 2, wobei das Gelenkverbindungsstück "T"- oder "L"-förmiges Gelenkverbindungsstück ist.

4. Erweiterbares vertikales Gartensystem nach einem der vorhergehenden Ansprüche, wobei die Auffangwanne (7) nach jedem dritten Hohlraum befestigt ist.

5. Erweiterbares vertikales Gartensystem nach einem der vorhergehenden Ansprüche, wobei der Rahmen optional seitliche vertikale Halterungen enthält, an denen Klemmen befestigt sein können, um das vertikale Bewässerungsrohr zu halten.

6. Erweiterbares vertikales Gartensystem nach einem der vorhergehenden Ansprüche, wobei der Rahmen neben und/oder auf einem anderen befestigt werden kann.

7. Erweiterbares vertikales Gartensystem nach einem der vorhergehenden Ansprüche, wobei jeder Topf oder Pflanzenbehälter durch Tropfer tropfenbewässert wird, die an der Tropfenbewässerungsleitung (9) befestigt sind, wodurch die Wasserzufuhr pro Topf reguliert wird.

8. Erweiterbares vertikales Gartensystem nach einem der vorhergehenden Ansprüche, wobei die Bewässerungsleitung durch ein automatisiertes und/oder manuelles System geregelt werden kann.

9. Erweiterbares vertikales Gartensystem nach einem der vorhergehenden Ansprüche, wobei der Rahmen enthält:
[i] vier Löcher (1) zum Einsetzen von Schrauben, die in die Haltewand / das Rahmentragwerk gebohrt werden;
[ii] drei große Hohlräume (2), in die die Töpfe oder Pflanzenbehälter eingerastet und ausgerastet werden können;
[iii] vier Halteelemente (3) in jedem Hohlraum, damit die Töpfe eine Verankerung erhalten;
[iv] zwei kleine Löcher (4), in die die Klemme zum Halten des horizontalen Bewässerungsrohrs befestigt werden kann;
[v] ein großes Loch (5) zum Einsetzen der Auffangwanne (7);
[vi] einen Hohlraum auf der Rückseite jedes Rahmens, in dem das Entwässerungsrohr (6) befestigt werden kann.

10. Erweiterbares vertikales Gartensystem nach Anspruch 1, wobei das System vertikal und/oder horizontal erweiterbar ist.

11. Verfahren für eine Pflanzung, das das vertikale Gartensystem nach einem der vorhergehenden Ansprüche aufweist.

## Revendications

1. Système de jardin vertical extensible, comprenant :
[a] un cadre ;
[b] un ou des tuyaux d'irrigation goutte à goutte ;
[c] un ou des tuyaux de drainage ;
[d] un plateau de drainage ; et, facultativement,
[e] des pots ou des bacs pour plantes ; le cadre comprenant :
[i] des trous (1) pour l'insertion de vis, percés dans la paroi de support /le cadre ;
[ii] une cavité (2) permettant la mise en place et le retrait de pots ;
[iii] des éléments de support (3) dans chaque cavité pour un ancrage satisfaisant des pots ;
[iv] des trous de petite dimension (4) au-dessus de chaque cavité, permettant de fixer l'attache de maintien d'un tuyau d'irrigation horizontal ;
[v] un trou de grande dimension (5) en bas du cadre, pour l'insertion du plateau de drainage (7) ;
[vi] une cavité sur la face arrière de chaque cadre, permettant la fixation du tuyau de drainage (6).

2. Système de jardin vertical extensible selon la revendication 1, où le tuyau de drainage (6) est raccordé au plateau de drainage (7) au moyen d'un raccord (8).

3. Système de jardin vertical extensible selon la revendication 2, où le raccord est un raccord en "T" ou en "L".

4. Système de jardin vertical extensible selon l'une des revendications précédentes, où le plateau de drainage (7) est fixé sous chaque troisième cavité.

5. Système de jardin vertical extensible selon l'une des revendications précédentes, où le cadre comporte facultativement des supports verticaux latéraux où des attaches peuvent être fixées pour supporter le tuyau d'irrigation vertical.

6. Système de jardin vertical extensible selon l'une des revendications précédentes, où les cadres peuvent être l'un à côté de l'autre et/ou l'un au-dessus de l'autre.

7. Système de jardin vertical extensible selon l'une des revendications précédentes, où chaque pot ou bac pour plantes est irrigué au goutte à goutte par des goutteurs fixés sur le tuyau d'irrigation goutte à goutte (9), régulant ainsi l'alimentation en eau par pot.

8. Système de jardin vertical extensible selon l'une des revendications précédentes, où le tuyau d'irrigation peut être régulé par un système automatique et/ou manuel.

9. Système de jardin vertical extensible selon l'une des revendications précédentes, où le cadre comporte :
[i] quatre trous (1) pour l'insertion de vis, percés dans la paroi de support /le cadre ;
[ii] trois cavités de grande dimension (2) permettant la mise en place et le retrait de pots ou de bacs pour plantes;
[iii] quatre éléments de support (3) dans chaque cavité pour l'ancrage des pots ;
[iv] deux trous de petite dimension (4), permettant de fixer l'attache de maintien du tuyau d'irrigation horizontal ;
[v] un trou de grande dimension (5) pour l'insertion du plateau de drainage (7) ;
[vi] une cavité sur la face arrière de chaque cadre, permettant la fixation du tuyau de drainage (6).

10. Système de jardin vertical extensible selon la revendication 1, où le système est extensible verticalement et/ou horizontalement.

11. Procédé de culture, comprenant le système de jardin vertical selon l'une des revendications précédentes.
